(19) Europäisches Patentamt
European Patent Office
Office européen des brevets

(11) **EP 4 276 737 A1**

(12) **EUROPÄISCHE PATENTANMELDUNG**

(43) Veröffentlichungstag:
**15.11.2023 Patentblatt 2023/46**

(21) Anmeldenummer: **22172989.0**

(22) Anmeldetag: **12.05.2022**

(51) Internationale Patentklassifikation (IPC):
*G06T 5/50* (2006.01)    *H04N 5/225* (2006.01)
*G02B 21/36* (2006.01)    *G02B 21/00* (2006.01)

(52) Gemeinsame Patentklassifikation (CPC):
**G02B 21/367; G02B 21/0064; G06T 5/50;**
**H04N 23/55; H04N 23/56**

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Engel, Thomas**
**73432 Aalen (DE)**

(74) Vertreter: **Siemens Patent Attorneys**
**Postfach 22 16 34**
**80506 München (DE)**

(54) **FOURIER-PTYCHOGRAFISCHE ERZEUGUNG EINES BILDS**

(57) Die Fourier-ptychografische Erzeugung von Bildern soll vereinfacht werden. Dazu wird ein Objekt mit einer Vielzahl an Beleuchtungselementen, die an einer entsprechenden Vielzahl an Orten im Raum verteilt angeordnet sind, beleuchtet. Mehrere Ortsfrequenzmuster (16) resultierend aus dem Beleuchten des Objekts, jeweils mit einem oder mehreren der Vielzahl an Beleuchtungselementen werden erfasst. Jedes Ortsfrequenzmuster wird an einer jeweiligen Position im Fourier-Raum zentriert, die einer Nominalortsfrequenz (8) des jeweiligen Beleuchtungselements beziehungsweise der jeweiligen Beleuchtungselemente entspricht, zentriert. Das Bild wird unter Verwendung einer Gesamtheit aller jeweiligen zentrierten Ortsfrequenzmuster rekonstruiert.

FIG 18

EP 4 276 737 A1

**Beschreibung**

Die vorliegende Erfindung betrifft ein Verfahren zur Fourier-ptychografischen Erzeugung eines Bilds eines Objekts mittels einer farbkorrigierten Optik durch Beleuchten des Objekts mit einer Vielzahl an Beleuchtungselementen, die an einer entsprechenden Vielzahl an Orten im Raum verteilt angeordnet sind. Darüber hinaus betrifft die vorliegende Erfindung eine korrespondierende Vorrichtung zur Fourier-ptychografischen Erzeugung eines Bilds eines Objekts mit einer farbkorrigierten Optik und einer Beleuchtungseinrichtung.

Ptychografie ist ein mikroskopisches Verfahren. Die zu untersuchende Probe wird von einem elektromagnetischen Strahl beziehungsweise einem Teilchenstrahl abgetastet, welcher von dem Material gestreut wird und ein Beugungs- und/oder Interferenzmuster bildet. Der Strahl verändert seine Position jedes Mal ein wenig (z. B. unterschiedliche Orte der Lichtquellen), so dass er in unterschiedlichen Winkeln auf die Probe trifft und entsprechend auch unterschiedliche Beugungs- und/oder Interferenzbilder generiert. Aus den Beugungs- und/oder Interferenzbildern von vielen Orten der Probe kann durch einen Algorithmus (z. B. Fourier-Rücktransformation) ein Bild der gesamten Probe errechnet werden. Der Vorteil dieser Technik besteht darin, dass das Beugungs- und/oder Interferenzmuster auch Informationen über Phasen der Wellen enthält und so beispielsweise auch durchsichtige Strukturen abbilden kann.

Bei der Fourier-Ptychografie (FP) ist für die Bildrekonstruktion ein Wellenlängenparameter erforderlich, um eine korrekte Rekonstruktion durchzuführen. Technisch gesehen muss das räumliche Frequenzspektrum des Beugungsmusters mit dem lateralen räumlichen Frequenzmuster des Bildes, wie es vom Detektor erfasst und durch eine anschließende Fourier-Transformation des Bildes erzeugt wird, verknüpft werden.

Bei der Bildgebung wird in der Regel nicht eine einzige Wellenlänge verwendet, sondern ein schmäleres oder breiteres Emissionsspektrum einer Lichtquelle. In den gegenwärtigen Implementierungen der Fourier-Ptychografie wird das spektrale Profil nicht berücksichtigt, und der Wellenlängenparameter wird umgekehrt als ein (effektiver bzw. gemittelter) Wert im Emissionsspektrum der Lichtquelle bestimmt, indem das rekonstruierte Bild z.B. durch Variation des Wertes für den Wellenlängenparameter optimiert wird.

In der Literatur und in Auswertecodes, wie sie in Software-Paketen für die Fourier-Ptychografie verfügbar sind (z. B. G. Zheng: "Fourier ptychographic imaging", 2016, Verlag: Morgan & Claypool Publishers, ISBN 978-1-64327-860-5), gibt es heute nur den einen Parameter der Wellenlänge, der bei jeder Rekonstruktion optimiert werden kann, um die Bildqualität zu optimieren. Es gibt jedoch keinen Ansatz, der das spektrale Profil der Lichtquelle berücksichtigt. Es wird alles indirekt durch den einen Parameter der Wellenlänge verdeckt, der in etwa dem gewichteten Durchschnitt der effektiven Wellenlänge entspricht, die durch das gesamte optische System übertragen wird.

Die Aufgabe der vorliegenden Erfindung besteht somit darin, die Fourier-ptychografische Rekonstruktion eines Bilds eines Objekts zu vereinfachen.

Erfindungsgemäß wird diese Aufgabe gelöst durch ein Verfahren und eine Vorrichtung entsprechend den unabhängigen Patentansprüchen. Darüber hinaus wird ein entsprechendes Computerprogramm beziehungsweise computerlesbares Speichermedium bereitgestellt. Vorteilhafte Weiterbildungen der Erfindung ergeben sich aus den Unteransprüchen.

Entsprechend der vorliegenden Erfindung wird ein Verfahren zur Fourier-ptychografischen Erzeugung eines Bildes eines Objekts mittels einer farbkorrigierten Optik zur Verfügung gestellt. Die vorliegende Erfindung macht sich die Tatsache zunutze, dass das Bild eines bildgebenden Systems typischerweise in einem sehr hohen Maße farbkorrigiert ist. Dies ist eine Voraussetzung für alle bildgebenden Systeme vom Mikroskop bis zu makroskopischen Abbildungssystemen, Fotokameras und dergleichen. Selbst bei kritischen Anwendungen wie der Lithographie ist die jeweilige Optik für das verwendete optische Spektrum farbkorrigiert. Auch bei chromatischen konfokalen Abbildungssystemen (z. B. konfokale Weißlichtsensoren oder Farbscanning-Mikroskope wie das Zeiss CSM mit Nipkow-Scheibe) wird der laterale Farbfehler kompensiert und nur ein axialer Farbfehler mit bestimmten Eigenschaften in das System eingebaut.

Bei dem erfindungsgemäßen Verfahren erfolgt ein Beleuchten des Objekts mit einer Vielzahl an Beleuchtungselementen, die an einer entsprechenden Vielzahl an Orten im Raum verteilt angeordnet sind. Die Beleuchtungsquelle für das Objekt ist eine Beleuchtungseinrichtung mit vielen einzelnen Beleuchtungselementen, die sich an vorbestimmten Orten im Raum befinden können. Beispielsweise handelt es sich um einen Matrixstrahler. Jedes einzelne Beleuchtungselement wird vorzugsweise als punktförmig angesehen und kann entsprechend an dem jeweiligen Punkt verortet werden.

In einem weiteren Schritt des erfindungsgemäßen Verfahrens erfolgt das Erfassen mehrerer Ortsfrequenzmuster resultierend aus dem Beleuchten des Objekts jeweils mit einem einzelnen oder mehreren der Vielzahl an Beleuchtungselementen. Es wird also das Objekt beispielsweise separat mit einzelnen Beleuchtungselementen der Beleuchtungseinrichtung beleuchtet. Das Beleuchten kann aber auch mit Gruppen von Beleuchtungselementen aus dieser Vielzahl von Beleuchtungselementen erfolgen. Das Objekt wird also nacheinander mit einzelnen oder mehreren der Vielzahl an Beleuchtungselementen beleuchtet. Gleichzeitig wird hierbei entweder ein einzelnes Beleuchtungselement oder eine Gruppe von Beleuchtungselementen zur Beleuchtung eingeschaltet.

Anschließend wird ein Zentrieren jedes Ortsfrequenzmusters an einer (jeweiligen) Position im Fourier-Raum durchgeführt, die einer Nominalortsfrequenz des jeweiligen Beleuchtungselements beziehungsweise der jeweiligen Beleuchtungselemente entspricht. Die Nominalortsfrequenz ist im Fourier-Raum derjenige Punkt, der das Zentrum des Ortsfrequenzmusters eines Beleuchtungselements in Abhängigkeit von dessen Ort darstellt. Jedes Ortsfrequenzmuster beziehungsweise Interferenzmuster ist somit an einer spezifischen Stelle im Fourier-Raum zentriert, die ihrer Nominalortsfrequenz entspricht.

Schließlich erfolgt ein Rekonstruieren des Bildes unter Verwendung einer Gesamtheit aller jeweilig zentrierten Ortsfrequenzmuster. Beispielsweise werden sämtliche Ortsfrequenzmuster "summiert" (d.h. räumlich zusammengefügt) und durch Fourier-Rücktransformation wird daraus ein Bild gewonnen. Aufgrund der farbkorrigierten Optik gibt es keine Dispersion, so dass das Rekonstruieren unabhängig von der Wellenlänge erfolgen kann.

In einer vorteilhaften Ausgestaltung des erfindungsgemäßen Verfahrens ist vorgesehen, dass die Vielzahl an Orten im Raum, an denen die Beleuchtungselemente verteilt angeordnet sind, auf einer Fläche liegen, die eben, ellipsoidisch oder kugelschalenabschnittförmig ausgebildet ist. So können die Beleuchtungselemente beispielsweise gleichmäßig auf einer rechteckförmigen Fläche verteilt sein. Dadurch ergibt sich beispielsweise ein Matrixstrahler. Alternativ können die Beleuchtungselemente auch auf der Oberfläche einer Kugel (oder eines anderen Körpers) verteilt angeordnet sein. Insbesondere können sie auf einem Kugelschalenabschnitt gleichförmig verteilt sein. Speziell kann diese Verteilung auch auf einer Hemisphäre gegeben sein. Sowohl eine Verteilung auf einer z. B. rechteckförmigen ebenen Fläche als auch eine Verteilung auf einem Kugelabschnitt ermöglichen einen einfachen Rekonstruktionsalgorithmus zum Rekonstruieren eines Bildes.

In einem Ausführungsbeispiel des erfindungsgemäßen Verfahrens wird die jeweilige Nominalortsfrequenz (unmittelbar) aus einem Einstrahlwinkel des jeweiligen Beleuchtungselements auf das Objekt oder einer Position des jeweiligen Beleuchtungselements ermittelt. Beispielsweise ist es bei einer rechteckförmigen Anordnung der Beleuchtungselemente vorteilhaft, die Nominalortsfrequenz des jeweiligen Beleuchtungselements aus dessen Position (z. B. x- und y-Koordinaten) unmittelbar zu bestimmen. Bei einer sphärischen (d.h. kugelschalen(abschnitt)förmigen) Anordnung der Beleuchtungselemente ist es hingegen vorteilhaft, wenn die Nominalortsfrequenz eines jeweiligen Beleuchtungselements unmittelbar aus dessen Einstrahlwinkel auf das Objekt ermittelt wird. So können die Koordinaten im K-Raum (Fourier-Raum) direkt aus dem polaren Winkel und dem azimutalen Winkel jedes Beleuchtungselements ermittelt werden.

Wie oben bereits angedeutet wurde, können so bei einer rechtwinkligen Anordnung der Vielzahl an Beleuchtungselementen, die in orthogonalen Raumrichtungen x und y zueinander einen gleichförmigen Abstand $P_x$ und $P_y$ besitzen, die Nominalortsfrequenzen berechnet werden mit den Formeln: $K_{x,i} = \text{atan}(i*P_x/D)$ und $K_{y,j} = \text{atan}(j*P_y/D)$, wobei D einer Distanz zwischen einer Objektebene, in der sich das Objekt befindet, und einer Beleuchtungsebene, in der die Vielzahl an Beleuchtungselementen angeordnet ist, entspricht. Alternativ können die Nominalortsfrequenzen bei einer sphärischen Anordnung der Vielzahl der Beleuchtungselemente, die bei azimutalen Winkeln $\varphi_{ij}$ in Ringen i und Polarwinkeln $\vartheta_i$, zu einer optischen Achse der Optik angeordnet sind, mit den Formeln berechnet werden: $K_{x,ij} = \vartheta_i \cos(\varphi_{ij}+\delta\varphi_i)$ und $K_{y,ij} = \vartheta_i \sin(\varphi_{ij}+\delta\varphi_i)$, wobei $\delta\varphi_i$ ein gleichförmiger azimutaler Abstand der Beleuchtungselemente auf dem jeweiligen Ring i ist.

Im Falle der Kugel bzw. Sphäre können somit die Nominalortsfrequenzen aus den Kugelkoordinaten, die die Orte der Lichtquellen beschreiben, und im Falle eines ebenen Arrays an Beleuchtungselementen aus den kartesischen Koordinaten der jeweiligen Lichtquellenorte berechnet werden. Die einfachen Gleichungen ergeben sich für den Fall, dass die Kugel beziehungsweise das Array auch auf die optische Achse des Abbildungssystems "zentriert" ist und die Orte der Lichtquellen für diese Ausrichtung des Beleuchtungssystems bekannt sind. Liegt keine Zentrierung vor, müssten "Offsets" berücksichtigt werden, um die Zentrierung rechnerisch herbeizuführen.

Wie erwähnt kann das Rekonstruieren des Bildes eine Fourier-Rücktransformation der Gesamtheit aller jeweilig zentrierten Ortsfrequenzmuster beinhalten. Dies bedeutet, dass alle mit den einzelnen Beleuchtungselementen beziehungsweise Gruppen von Beleuchtungselementen gewonnenen Ortsfrequenzmuster bei der Rücktransformation berücksichtigt werden. Die Rücktransformation kann somit durch einen einfachen Algorithmus realisiert werden.

Bei einer besonders bevorzugten Ausführungsform ist vorgesehen, dass ein für das Rekonstruieren des Bildes genutzter Ortsfrequenzraum bzw. Fourier-Raum auf Basis einer maximalen Ortsfrequenz begrenzt wird, die durch eine numerische Apertur der farbkorrigierten Optik definiert ist. Die Ortsfrequenz für die Auflösungsgrenze ergibt sich also unmittelbar aus der numerischen Apertur. Dabei besteht jedoch eine Wellenlängenabhängigkeit dahingehend, dass für die Berechnung der Ortsfrequenz die numerische Apertur durch die Wellenlänge dividiert wird.

Weiterhin kann jedes Ortsfrequenzmuster mit einem Verlaufs- oder Apodisationsfilter begrenzt werden, das gemäß den optischen und/oder wellenlängenabhängigen Übertragungseigenschaften, z.B. anhand der Modulationsübertragungsfunktion, des optischen Systems konfiguriert ist. Durch diese Begrenzung des Ortsfrequenzspektrums für jedes der Einzelbilder kann eine Reduzierung des Rechenaufwands bei der Rekonstruktion erreicht werden.

Bei einer weiteren vorteilhaften Ausgestaltung des erfindungsgemäßen Verfahrens ist vorgesehen, dass jedes Ortsfrequenzmuster mit einer inversen Modulationsübertragungsfunktion der farbkorrigierten Optik korrigiert wird. Diese Korrektur führt dazu, dass der Einfluss der farbkorrigierten Optik auf den Bildinhalt reduziert und bestenfalls vollständig kompensiert wird. Auf diese Weise können nahezu unverfälschte Ortsfrequenzmuster ermittelt werden.

In einer Weiterentwicklung kann vorgesehen sein, dass bei dem Rekonstruieren jedes mit dem einzelnen oder den mehreren der Vielzahl der Beleuchtungselemente gewonnene Einzelbild durch Dekonvolution von der Modulationsübertragungsfunktion der farbkorrigierten Optik befreit wird, jedes so korrigierte Einzelbild anschließend zu einem jeweiligen korrigierten Ortsfrequenzmuster transformiert wird und erst die korrigierten Ortsfrequenzmuster zusammengefügt werden. Im vorliegenden Fall findet also eine Korrektur der Einzelbilder bereits im Ortsraum vor der Transformation in den Ortsfrequenzraum statt.

Alternativ kann bei dem Rekonstruieren jedes mit dem einzelnen oder den mehreren der Vielzahl der Beleuchtungselemente gewonnene Einzelbild durch Fourier-Transformation zu einem jeweiligen Ortsfrequenzmuster transformiert werden, jedes Ortsfrequenzmuster wird dann anschließend von den Einflüssen der Optik und/oder der Beleuchtungselemente auf eine jeweilige Übertragungsfunktion für Fourier-Komponenten des jeweiligen Ortsfrequenzmusters befreit, und erst die so korrigierten Ortsfrequenzmuster werden zusammengefügt. Hier findet die Korrektur also im Ortsfrequenzraum statt und nicht im Ortsraum. Auch dies kann Vorteile im Hinblick auf die Rechengeschwindigkeit bringen.

Bei einer weiteren vorteilhaften Ausgestaltung des erfindungsgemäßen Verfahrens ist vorgesehen, dass bei dem Rekonstruieren des Bildes alle Ortsfrequenzmuster mit Hilfe eines iterativen Optimierungsalgorithmus zusammengefügt werden. Auf diese Weise ist es möglich, die Ortsfrequenzmuster derart zu kombinieren, dass letztendlich ein hochaufgelöstes Bild erhalten werden kann.

Die oben genannte Aufgabe wird erfindungsgemäß auch gelöst durch eine Vorrichtung zur Fourier-ptychografischen Erzeugung eines Bilds eines Objekts mit

- einer farbkorrigierten Optik und
- einer Beleuchtungseinrichtung zum Beleuchten des Objekts mit einer Vielzahl an Beleuchtungselementen, die an einer entsprechenden Vielzahl an Orten im Raum verteilt angeordnet sind, sowie aufweisend
- eine Erfassungseinrichtung zum Erfassen mehrerer Ortsfrequenzmuster resultierend aus dem Beleuchten des Objekts jeweils mit einem einzelnen oder mehreren der Vielzahl an Beleuchtungselementen und
- eine Recheneinrichtung (ausgebildet) zum Zentrieren jedes Ortsfrequenzmusters an einer Position im Fourier-Raum, die einer Nominalortsfrequenz des jeweiligen Beleuchtungselements bzw. der jeweiligen Beleuchtungselemente entspricht, und zum Rekonstruieren des Bildes unter Verwendung einer Gesamtheit aller jeweilig zentrierten Ortsfrequenzmuster. Die Recheneinrichtung kann in den optischen Sensor integriert sein oder eine separate Einheit bilden.

Die oben im Zusammenhang mit dem erfindungsgemäßen Verfahren dargelegten Vorteile und Weiterbildungen gelten sinngemäß auch für die erfindungsgemäße Vorrichtung. Dem entsprechend sind die dargestellten Verfahrensmerkmale bei der Vorrichtung als funktionale Merkmale entsprechender Mittel zu sehen. Erfindungsgemäß wird auch ein Computerprogramm bereitgestellt, das Befehle umfasst, die bei der Ausführung des Programms durch eine oben genannte Vorrichtung diese veranlassen, das ebenfalls oben geschilderte Verfahren auszuführen. Weiterhin kann ein computerlesbares Speichermedium bereitgestellt werden, das Befehle umfasst, die bei der Ausführung durch die obige Vorrichtung diese veranlassen, das genannte Verfahren auszuführen. Das Speichermedium kann z. B. zumindest teilweise als ein nichtflüchtiger Datenspeicher (z. B. als ein Flash-Speicher und/oder als SSD - Solid state drive) und/oder zumindest teilweise als ein flüchtiger Datenspeicher (z. B. als ein RAM - Random access memory) ausgestaltet sein. Das Speichermedium kann ferner in einem Datenspeicher einer Prozessorschaltung realisiert sein. Das Speichermedium kann aber auch beispielsweise als so genannter App-Store-Server im Internet betrieben sein. Durch einen Computer oder Computerverbund kann eine Prozessorschaltung mit zumindest einem Mikroprozessor bereitgestellt sein. Die Befehle können als Binärcode oder Assembler und/oder als Quellcode einer Programmiersprache (z. B. C) bereitgestellt sein.

Für Anwendungsfälle oder Anwendungssituationen, die sich bei dem Verfahren ergeben können und die hier nicht explizit beschrieben sind, kann vorgesehen sein, dass gemäß den Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die Erfindung umfasst auch die Kombinationen der Merkmale der beschriebenen Ausführungsformen.

Im Folgenden werden Ausführungsbeispiele der Erfindung beschrieben. Hierzu zeigt:

FIG 1    einen Aufbau eines FP-Mikroskops;
FIG 2    eine Vergrößerung der Beleuchtungseinrichtung des FP-Mikroskops;
FIG 3    eine vergrößerte Darstellung der Objektebene des FP-Mikroskops;
FIG 4    eine schematische Ansicht einer rechteckförmigen Beleuchtungsanordnung;
FIG 5    eine schematische Draufsicht auf eine sphärische Beleuchtungsanordnung;
FIG 6    den Fourier-Raum der Anordnung von FIG 4;

FIG 7      den Fourier-Raum der Anordnung von FIG 5;

FIG 8      ein Spektrum eines Beleuchtungselements;

FIG 9      Auflösungsgrenzen im Fourier-Raum;

FIG 10     eine Amplitudenverteilung im Fourier-Raum;

FIG 11     eine schematische Darstellung eines Rekonstruktionsablaufs;

FIG 12     eine Übertragungsfunktion eines optischen Systems;

FIG 13     eine normalisierte Übertragungsfunktion;

FIG 14     eine spektrale Verteilung unter Berücksichtigung des optischen Systems;

FIG 15     eine Modulationsübertragungsfunktion eines realen optischen Systems;

FIG 16     ein Ablaufdiagramm eines Rekonstruktionsalgorithmus;

FIG 17     ein Ablaufdiagramm eines alternativen Rekonstruktionsalgorithmus;

FIG 18     den Fourier-Raum der rechteckigen Beleuchtungsanordnung mit K-Räumen des Bildsensors und

FIG 19     den Fourier-Raum einer sphärischen Beleuchtungsanordnung mit K-Räumen des Bildsensors.

Die nachfolgend näher geschilderten Ausführungsbeispiele stellen bevorzugte Ausführungsformen der vorliegenden Erfindung dar.

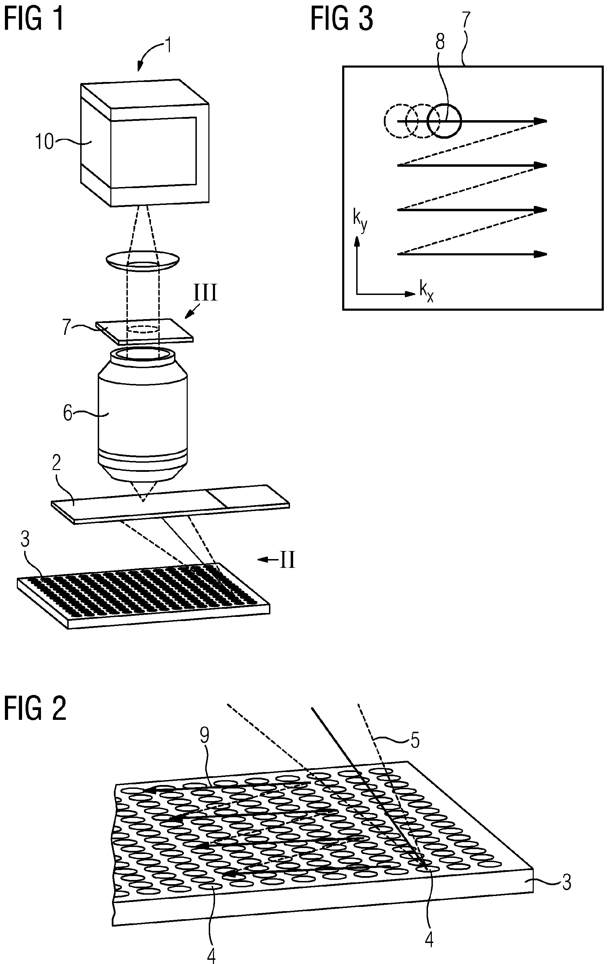

FIG 1 zeigt einen üblichen Aufbau eines Fourier-Ptychografie-Mikroskops 1. Es besitzt eine Objektebene, in der ein abzubildendes Objekt 2 angeordnet ist. Das Objekt 2 wird von unten mit Hilfe einer Beleuchtungseinrichtung 3 beleuchtet.

FIG 2 zeigt einen vergrößerten Ausschnitt der Beleuchtungseinrichtung 3. Sie besitzt eine Vielzahl an regelmäßig angeordneten Beleuchtungselementen 4. Im vorliegenden Beispiel sind die Beleuchtungselemente matrixförmig in orthogonalen Richtungen x und y angeordnet. Jedes Beleuchtungselement kann beispielsweise als LED realisiert sein, das einen Beleuchtungsstrahl 5 auf das Objekt 2 aussendet. Die Pfeile 6 deuten in FIG 2 an, in welcher Richtung die einzelnen Beleuchtungselemente 4 nacheinander ein- und wieder ausgeschaltet werden können. So kann beispielsweise eine Einschaltreihenfolge darin bestehen, dass zunächst in einer ersten Zeile die Beleuchtungselemente 4 nacheinander eingeschaltet werden, anschließend diejenigen in einer zweiten Zeile und so weiter. Grundsätzlich kann eine beliebige Reihenfolge gewählt werden. Des Weiteren können auch mehrere Beleuchtungselemente 4 in einer Gruppe gemeinsam eingeschaltet und wieder ausgeschaltet werden.

Der Beleuchtungsstrahl jedes Beleuchtungselements 4 wird durch das Objekt 2 gebeugt und von einer Optik 6 gesammelt. Jenseits der Optik 6 ergibt sich der Fourier-Raum 7 für die Abbildung des Objekts 2.

Dieser Fourier-Raum 7 ist in FIG 3 in Draufsicht vergrößert dargestellt. Er besitzt die Koordinaten $K_x$ und $K_y$. Für jedes einzelne Beleuchtungselement 4 ergibt sich in dem Fourier-Raum 7 eine Nominalortsfrequenz 8. Diese Nominalortsfrequenz 8 stellt beispielsweise den Mittelpunkt des dargestellten Kreises dar und wandert analog zu dem Pfeil 9 von FIG 2.

Der Fourier-Raum 7 wird von einem optischen Sensor 10 des FP-Mikroskops 1 aufgenommen beziehungsweise abgetastet.

Mit diesem FP-Mikroskop (hier Durchlichtmikroskop) ist die Aufnahme einer Bildsequenz eines Objekts mit verschiedenen kollimierten oder sehr niedrigaperturigen räumlichen Beleuchtungen im Hellfeld- und/oder Dunkelfeldmodus möglich. Anstelle der flachen Anordnung der Beleuchtungselemente 4 ist auch eine (hemi-)sphärische Anordnung möglich. Es kann davon ausgegangen werden, dass das Mikroskop optisch so korrigiert ist, dass es Bilder der Probe in guter Qualität aufnimmt, ohne nennenswerte Verzerrungen oder chromatische Aberrationen. Optional kann die Beleuchtungswellenlänge durch die verwendete LED oder in Kombination mit Bandpassfiltern von z. B. 10, 50 oder 80 nm Halbwertsbreite vor der Schwarz-Weiß-Kamera gewählt werden. Die Tubuslinse des FP-Mikroskops kann Abbildungsfehler verursachen. Diese Effekte können insbesondere in den paraxialen Bereichen des Objektraums von z. B. < +/- 500 μm zur optischen Achse auftreten.

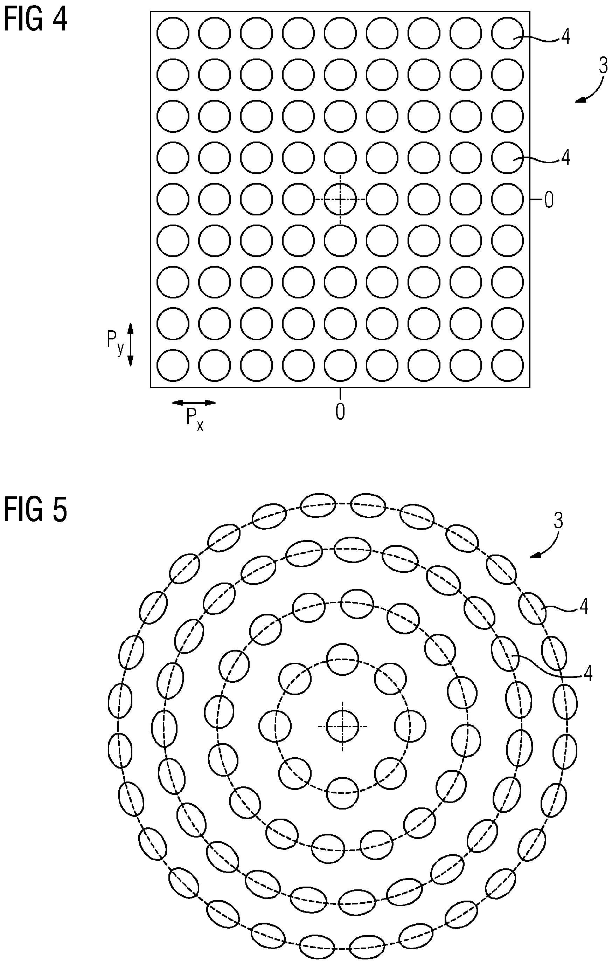

Anhand der FIG 4 bis 7 werden nun rechteckige Anordnungen und sphärische Anordnungen von Beleuchtungselementen im Ortsraum und deren Auswirkungen im Ortsfrequenzraum näher dargestellt. FIG 4 zeigt eine rechteckige Anordnung von Beleuchtungselementen 4. Die Beleuchtungseinrichtung besitzt hier 81 Beleuchtungselemente 4 (z. B. LEDs). Sie besitzen in horizontaler Richtung x einen Abstand $P_x$ und in vertikaler Richtung y einen Abstand $P_y$. Jedes Beleuchtungselement besitzt entsprechende Koordinaten (i, j). Die Position jedes Beleuchtungselements 4 in einem Beleuchtungs-Winkelkoordinatensystem kann angegeben werden als:

$$K_{x,i} = \mathrm{atan}(i * P_x / D)$$

und

$$K_{y,j} = \texttt{atan(j*P_y/D)},$$

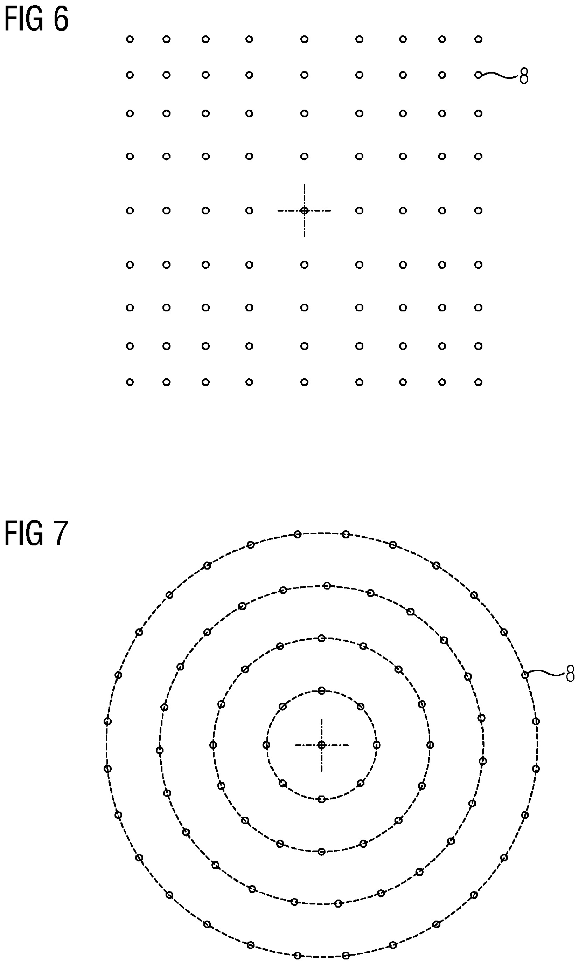

wobei i beispielsweise eine ganze Zahl aus dem Bereich von -m bis m und j eine ganze Zahl aus dem Bereich von -n bis n ist. D entspricht der Entfernung von der Objektebene des Objekts 2 zu der Beleuchtungsebene der Beleuchtungseinrichtung 3. FIG 6 zeigt ein entsprechendes Beleuchtungskoordinatensystem im Fourier-Raum für die rechteckige Beleuchtungsanordnung von FIG 4. Jeder Punkt stellt eine Nominalortsfrequenz 8 für diese rechteckige Anordnung dar. Die Abtastung ist dem entsprechend nicht äquidistant und die Symmetrieachsen können Aliasing-Effekte zeigen. Die Punktgröße für die Beleuchtungselemente wird durch die numerische Apertur der Beleuchtung jeder LED aus Sicht des Objekts bestimmt. Bei flachen Anordnungen nimmt die Punktgröße mit steigender Distanz von der optischen Achse ab.

In FIG 5 ist eine sphärische Anordnung von Beleuchtungselementen 4 in einer Draufsicht dargestellt. Die Beleuchtungselemente beziehungsweise LEDs besitzen eine konstante radiale Distanz R vom Schnittpunkt der optischen Achse (+) und der Objektebene. Die Ringe besitzen ein festes Winkelinkrement $\Delta\vartheta$. Die LEDs in den Ringen besitzen innerhalb des jeweiligen Rings einen konstanten Winkelabstand. Die individuelle azimutale Verschiebung $\delta\varphi_i$ pro Ring dient zur Vermeidung von Übersprecheffekten.

Die Anordnung von FIG 5 besitzt hier rein beispielhaft 76 Beleuchtungselemente 4 in vier Ringen um das Zentrum. $\varphi_{ij}$ stellt den azimutalen Winkel im Ring i dar. $\vartheta_i$ entspricht dem polaren Winkel zur optischen Achse.

Die Zentrumsposition der Beleuchtungselemente im Beleuchtungswinkel-Koordinatensystem lässt sich wie folgt darstellen:

$$K_{x,ij} = \vartheta_i \texttt{ cos} (\varphi_{ij}+\delta\varphi_i)$$

und

$$K_{y,ij} = \vartheta_i \texttt{ sin} (\varphi_{ij}+\delta\varphi_i)$$

oder explizit

$$K_{x,ij} = \texttt{i*}\Delta\vartheta \texttt{ cos} (\texttt{j*}\Delta\varphi_i+\delta\varphi_i)$$

und

$$K_{y,ij} = \vartheta_i \texttt{ sin} (\texttt{j*}\Delta\varphi_i+\delta\varphi_i)$$

wobei i eine ganze Zahl zwischen 0 und $N_R$-1 und j eine ganze Zahl zwischen 1 und $N_{R1}$ oder 1 und $N_{R2}$ bzw. 1 und $N_R$ je nach Ringnummer ist. $N_R$ beträgt dabei die maximale Anzahl der Beleuchtungselemente auf dem jeweiligen Ring. Der Abstand in Winkelkoordinaten zwischen den einzelnen Beleuchtungselementen ist wegen des sphärischen Aufbaus mit konstanten Winkelinkrementen gleichförmig. FIG 7 zeigt das entsprechende Beleuchtungskoordinatensystem im Fourier-Raum zu der sphärischen Anordnung der Beleuchtungselemente 4 von FIG 5. Hier ist ein äquidistantes Abtasten in radialer Richtung und in Umfangsrichtung möglich. Wegen der azimutalen Verschiebung $\Delta\varphi_i$ in jedem Ring gibt es keine Symmetrieachse.

Im Folgenden wird die Kombination des Beleuchtungskoordinatensystems und des Abtastkoordinatensystems des optischen Sensors im Fourier-Raum dargestellt. Das Beleuchtungskoordinatensystem erstreckt sich über einen größeren Bereich im Fourier-Raum-Koordinatensystem als das Bildkoordinatensystem (auch Abtastkoordinatensystem genannt). Um beide Koordinatensysteme zu kombinieren, müssen ihre Maße bzw. physikalischen Einheiten übereinstimmen. Das Maß im Beleuchtungskoordinatensystem ist die einheitslose numerische Apertur, d. h. der Sinus eines Winkels. Das Maß im Abtastkoordinatensystem beträgt beispielsweise 1/mm oder 1/µm, d. h. die inverse Länge.

Das Bindeglied zwischen beiden Koordinatensystemen ist die verwendete Wellenlänge $\lambda$, da die Beugungsformel die Strukturbreite $\lambda$, den Beugungswinkel $\alpha_n$ und die jeweilige Wellenlänge $\Lambda$ miteinander koppelt durch

$$\texttt{sin } \alpha_n = \texttt{n * } \lambda \texttt{ / } \Lambda$$

wobei n die Beugungsordnung angibt (normalerweise n = 1).

Dies impliziert einige generelle Aspekte. Zum einen ist das Beugungsmuster hochdispersiv (sin $\alpha \sim \lambda$) bei einer gegebenen Strukturbreite $\Lambda$. Zum anderen sind die Wellenlänge und die Bandbreite der Beleuchtung bei Standardmethoden für die Rekonstruktion von großer Bedeutung. Insbesondere spielt die effektive Wellenlänge bei der Umwandlung des Beleuchtungskoordinatenraums in den Fourier-Koordinatenraum der Abtastung eine wesentliche Rolle. In Bezug auf die Bandbreite ist die Dispersion in zweierlei Hinsicht von großer Bedeutung. Je höher die numerische Apertur der Optik ist, desto größer können die Auswirkungen sein. Dies ist nur dann unproblematisch, wenn die Optik gut korrigiert ist. In Bezug auf die Beugung korreliert die Bandbreite des beleuchtenden Lichts direkt mit der "Unschärfe" in den Beugungswinkeln für die Aperturebene. Die effektive Wellenlänge ergibt sich als Faltung aus der LED-Emission plus Filter- und Sensorempfindlichkeit und Modulationsübertragungsfunktion bei der jeweiligen Wellenlänge.

Für die aktuellen Rekonstruktionsalgorithmen ergeben sich dadurch nachstehende Folgen und Vorteile:

- Für eine gegebene Wellenlänge/effektive Wellenlänge und eine gegebene numerische Apertur gibt es eine deterministische Verbindungstransformation für Beleuchtungs- und Abtastkoordinatensysteme, wenn das Beleuchtungssystem in Winkeln relativ zur Sensorkoordinatenachse kalibriert ist.

- Die Bandbreite des Abbildungssystems muss nur kontrolliert beziehungsweise begrenzt werden, um eine Bildverschlechterung aufgrund chromatischer Aberration während der Abbildung zu vermeiden, wenn eine hohe numerische Apertur und hochauflösende, detailreiche Bilder angestrebt werden. So lange die Kameraoptik und das Bild von hoher Qualität sind, ist die Wellenlängenbandbreite unproblematisch.

- Verschiedene Abbildungswellenlängen können dazu dienen, Fourier-Muster auch bei geringer Überlappung der Abtastung für jede der Wellenlängen zu erzeugen.

Gegenüber gängigen Rekonstruktionsalgorithmen basiert das neue erfindungsgemäße Konzept auf der Beobachtung, dass die Optik und damit die vom Bildsensor aufgenommenen Bilder in einer zur Objektebene konjungierten Ebene von hoher Qualität sind. Es gibt bei vollständig farbkorrigierter Optik also keine Dispersion und damit keinen Wellenlängeneffekt im Bild. Daher wird erfindungsgemäß ein dispersionsfreier - nicht wellenlängenabhängiger - Ansatz für die Rekonstruktion von Ptychografie-Bildern bereitgestellt. Dazu muss die numerische Apertur der Beleuchtung mit der räumlichen Bildfrequenz verknüpft werden, ohne das Konzept der Beugungswinkel einführen zu müssen.

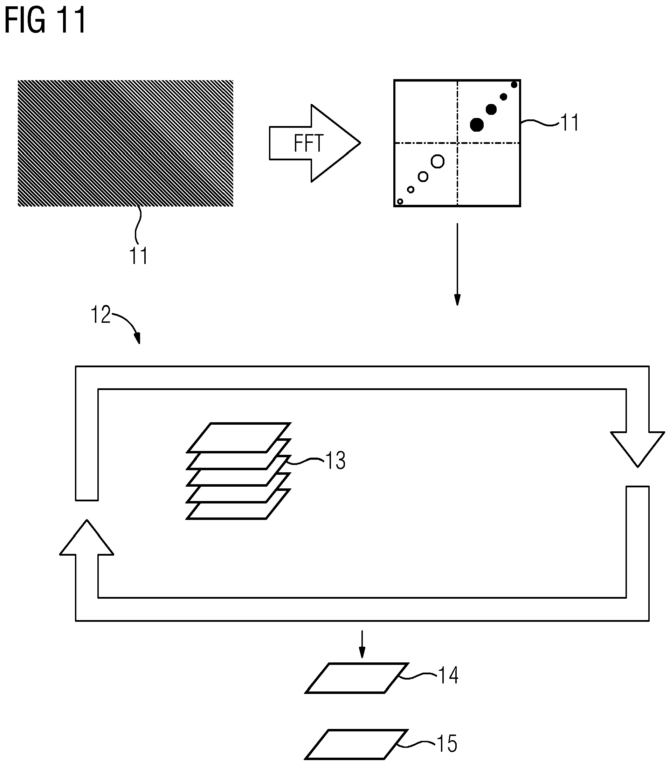

Um diesen Unterschied zu verdeutlichen, wird zunächst anhand von FIG 11 kurz erläutert, wie ein FP-Rekonstruktionsablauf gemäß dem Stand der Technik durch wellenlängenbasierte Winkeltransformation erfolgt. Ausgangspunkt ist beispielsweise ein Objektmuster 11 im Ortsraum. Nach einer Fourier-Transformation (FFT) ergibt sich im Ortsfrequenzraum bzw. Fourier-Raum ein entsprechendes Obertonspektrum 11' mit Linienabständen und konjungiert komplexen Komponenten. Für die Rekonstruktion ist zu beachten, dass eine blaue Wellenlänge ($\lambda_1$) kleiner als eine grüne Wellenlänge ($\lambda_2$) und diese wiederum kleiner als eine rote Wellenlänge ($\lambda_3$) ist. Der Einfallswinkel für jede Beleuchtungseinstellung ist wellenlängenunabhängig und beträgt $\alpha_i$ und $\beta_j$, wobei $\alpha_i$ der polare Winkel und $\beta_j$ der azimutale Winkel ist. Jeder Lichtquelle beziehungsweise jedem Beleuchtungselement können damit Winkelkoordinaten ($\alpha_i$, $\beta_j$) zugeordnet werden. Durch die Wellenlänge als Parameter kann der jeweilige Winkel in eine Gitterkonstante überführt werden, z.B. vereinfacht für Lichteinfall senkrecht zur Gitterebene:

$$G_1 = \lambda_1 \,/\, \sin(\alpha_1),\ G_2 = \lambda_2 \,/\, \sin(\alpha_2)\ \text{und}\ G_3 = \lambda_3 \,/\, \sin(\alpha_3).$$

Jedes Fourier-Transformationsmuster liegt dann im Fourier-Raum mit seinem Mittelpunkt an der Stelle ($g_i$, $\beta_j$), wobei $g_i = 1 / G_i$ die jeweilige Gitterfrequenz in einem gemeinsamen Koordinatensystem für die Fourier-Transformation und die Gitter-Raumfrequenz ist. Ein maximales Filter für $g_i$ kann realisiert sein als $g_{i,max} = 2\pi * NA / \lambda_i$.

Mit Filterung des Fourier-Raums auf den maximalen Beugungswinkel, der durch die numerische Apertur der Optik und die Wellenlänge definiert ist, ergibt sich somit, dass die Intensität im Fourier-Raum eine Funktion des polaren Winkels $\alpha_i$, des azimutalen Winkels $\beta_j$, der Wellenlänge $\lambda_i$ und der numerischen Apertur ist, nämlich:

$$I_1(g_i,\ \beta_j) = f(\alpha_i,\ \beta_j,\ \lambda_1,\ NA),$$

$$I_2(g_i,\ \beta_j) = f(\alpha_i,\ \beta_j,\ \lambda_2,\ NA)$$

und

$$I_3(g_i, \beta_j) = f(\alpha_i, \beta_j, \lambda_3, NA).$$

Mittels eines iterativen Algorithmus 12 ergibt sich aus einem Satz Bilder als Eingang mit Randbedingung ein hochaufgelöstes Bild mit zusammengesetzter Amplitude und Phase von Teilbildern (Selbstkonsistenz in Überlappungsbereichen des Fourier-Raums). Es resultiert ein entsprechendes monochromes Ausgangsbild 14 der entsprechenden Farbe sowie ein Phasenbild 15 pro Farbe.

Eine andere Möglichkeit, den Öffnungswinkel der Beleuchtung und die Ortsfrequenzen der Bildebene zu koppeln, besteht darin, das Konzept der Auflösungsgrenze einer Minimalstruktur $d_{min}$ durch ein optisches System mit numerischer Apertur NA und Wellenlänge $\lambda$ zu verwenden:

$$d_{min} = k_1 * \lambda / NA$$

Dabei ist $k_1$ ein Parameter, der vom angewandten Auflösungskriterium abhängt. Beispielsweise wird das Rayleigh-Kriterium $k_1 = 0{,}61$ oder das Sparrow-Kriterium $k_1 = 0{,}5 = k_{1,min}$ verwendet. Für einen modernen Kamerasensor mit linearer Intensitätsskalierung gilt $k_1 = 0{,}5$.

Die Auflösungsgrenze $d_{min}$ $(\lambda, k_1, NA)$ für einen gegebenen Abbildungsaufbau mit festem $k_1$ und NA lässt sich wie die Kamerapixel direkt in eine Ortsfrequenz übertragen:

$$k(\lambda) = 1/(2 * d_{min}(\lambda)) = NA/(2 * k_1 * \lambda)$$

Alternativ dazu gibt es für einen gegebenen Kamerasensor und $k_1$ eine Grenzwellenlänge $\lambda$, die den gesamten
Informationsgehalt des Bildes übertragen kann:

$$d_{min} = 2 * d_{pixel} = k_1 * \lambda / NA$$

Dies führt zu:

$$\lambda_{min} = 2 * NA * d_{pixel} / k_1$$

wobei alle Parameter auf der rechten Seite der letzten Gleichung fest sind und durch die Parameter des Abbildungs-aufbaus bestimmt werden. $\lambda_{min}$ ist die kürzeste Wellenlänge für den Abbildungsaufbau, die die volle numerische Apertur NA des Objektivs nutzt, um Strukturen mit dem Detektor eines bestimmten Pixelabstands $d_{pixel}$ abzubilden, so dass damit die Auflösung begrenzt werden kann.

Die entsprechende Raumfrequenz wird wie folgt berechnet:

$$k_{NA} = 2 * \pi / \lambda_{min} = 2 * \pi / (2 * NA * d_{pixel} / k_1) = \pi * k_1 / (NA * d_{pixel})$$

In einer zweidimensionalen Ebene kann die Ortsfrequenz entsprechend dem Azimutalwinkel $\beta_j$ der Beleuchtung gedreht und in die kartesischen Anteile aufgespalten werden mit:

$$k_{x,i,j} = k_{NA,ij} \cos(\beta_j) \qquad k_{y,i,j} = k_{NA,ij} \sin(\beta_j)$$

Für jede Lichtquelle (ij) wird die Fourier-Transformierte des jeweiligen Bildes an die Position $(K_{x,i,j}; K_{y,i,j})$ im resultierenden Fourier-Raum für die Bildrekonstruktion gesetzt.

Für ein gegebenes optisches System mit maximaler numerischer Apertur und verschiedenen Wellenlängen im Beleuchtungsspektrum ist die zu berechnende Ortsfrequenzgrenze bei allen Wellenlängen und festem $k_1$ wellenlängen-abhängig, und zwar nach der Formel:

$$k(\lambda) = 2 * \pi * NA/(2 * k_1 * \lambda) = \pi * NA/(k_1 * \lambda)$$

Der Faktor 2 * n in den obigen Formeln kann von der Art und Weise abhängen, wie die Normalisierung bei der Fourier-Transformation durchgeführt wird. (Gegebenenfalls wird die Normalisierung/Kalibrierung einer Fourier-Transformation auch auf andere Art durchgeführt.) Dies birgt die Chance, Wellenlänge und Bandbreite auf native Weise in den Bildrekonstruktionsprozess einzubeziehen.

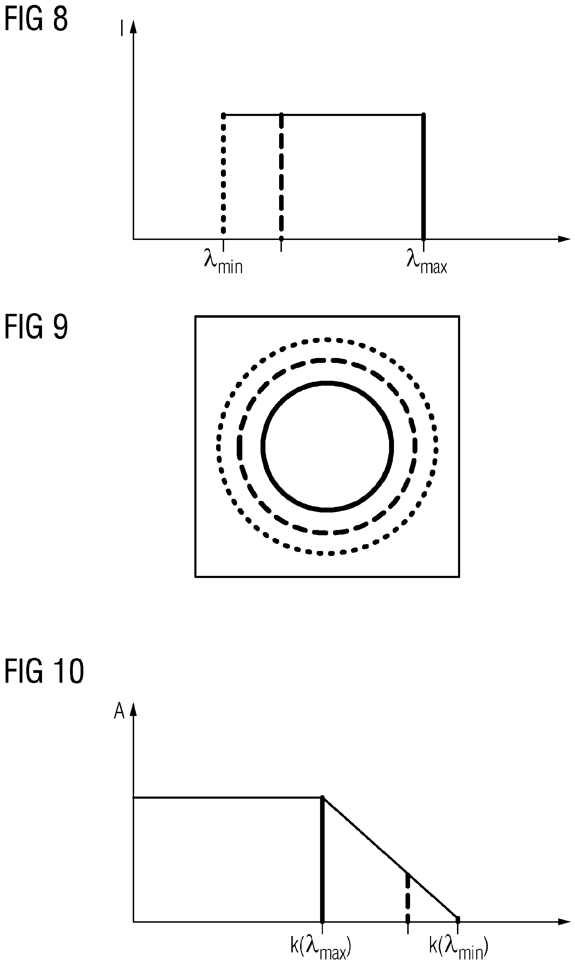

Die längste verwendete Wellenlänge hat die niedrigste Auflösungsgrenze, die mit einer darauf bezogenen Ortsfrequenz erreicht werden kann. Die kürzeste Wellenlänge hat den größten Raumfrequenzgehalt in der Fourier-Ebene. Unter der Voraussetzung, dass alle verwendeten Wellenlängen im Bereich von $\lambda_{min}$ bis $\lambda_{max}$ die gleiche Intensität haben (vgl. FIG 8), ergibt sich für den Fourier-Raum also die Konstellation gemäß FIG 9. Demnach liegen die Auflösungsgrenzen für kurzwelliges Licht $\lambda_{min}$ im Fourier-Raum deutlich weiter außen als die Auflösungsgrenzen für langwelliges Licht $\lambda_{max}$. Darüber hinaus zeigt FIG 10 einen radialen Schnitt durch den Fourier-Raum. Während der Beitrag der Raumfrequenzen unterhalb $k(\lambda_{max})$ konstant ist (alle Frequenzen leisten Beiträge), nimmt außerhalb von $k(\lambda_{max})$ der Beitrag der einzelnen Frequenzen ab. Oberhalb der Ortsfrequenzen $k(\lambda_{max})$ können die langwelligen Anteile des Lichts keinen Beitrag mehr leisten. Somit sinkt der Anteil der Beiträge kontinuierlich ab, bis auch schließlich mit der geringsten Wellenlänge $\lambda_{min}$ kein Beitrag mehr geleistet werden kann.

Mit dieser Erkenntnis ergibt sich für die Rekonstruktion (vgl. FIG 11) ein neuer Ansatz, gemäß dem der Einfallswinkel für jede Beleuchtungsquelle beziehungsweise jedes Beleuchtungselement bestimmt beziehungsweise kalibriert wird. Dabei ergibt sich beispielsweise eine Liste von Lichtquellenpositionen:

$$LS_k = (\alpha_i, \beta_j) \text{ oder } (x_i, y_j)$$

Hierbei ist $\alpha_i$ der polare Winkel und $\beta_j$ der azimutale Winkel.

Die räumliche Frequenzkomponente für alle verwendeten $(\alpha_i, \beta_j)$ oder $(x_i, y_j)$ kann wie folgt berechnet werden:

$$K_{x,i,j} = \cos(\beta_j)\sin(\alpha_i);$$

$$K_{y,i,j} = \sin(\beta_j)\sin(\alpha_i)$$

oder alternativ

$$K_{x,i,j} = K_{x,i} = atan(x_i/D);$$

$$K_{y,i,j} = K_{y,j} = atan(y_j/D)$$

Jedes Fourier-Transformationsmuster liegt dann im Fourier-Raum mit seinem Mittelpunkt an der Stelle $(K_{x,i,j}, K_{y,i,j})$ oder $(K_{x,i}, K_{y,j})$. Die weitere Rekonstruktion erfolgt gemäß FIG 11 in dem iterativen Algorithmus 12.

Bei einer erweiterten Version des Rekonstruktionsablaufs kann eine Filterung des Fourier-Raums auf die maximale Ortsfrequenz, die durch die numerische Apertur der Optik definiert ist, durchgeführt werden. Bei dem Algorithmus kann eine spektrale Bandbreiteninformation berücksichtigt werden.

Des Weiteren sind bei dem neuen Ansatz des Rekonstruktionsablaufs weitere Potentiale für Verbesserungen vorhanden. Zum einen ist durch den neuen Ansatz auf der Basis des Raumvektors beziehungsweise der Beleuchtung eine Spektralinformation auf der Basis des Farb- beziehungsweise Wellenlängenbandspektrums möglich und sinnvoll, was im Stand der Technik nicht möglich ist. Darüber hinaus kann eine Filterung der Fourier-Transformation für ein Rohbild mit einem Apodisationsfilter entsprechend dem spektralen Profil/Wellenlängenprofil der zur Aufnahme des jeweiligen Bildes verwendeten Lichtquelle erfolgen.

Das Wellenlängenspektrum ist in der Regel ein idealisiertes Hut- bzw. Rechteckprofil, das von $\lambda_{min}$ bis $\lambda_{max}$ reicht. Für eine quadratische Pixelgröße hat die Fourier-Ebene eine quadratische Form. Die Schrittweite der Abtastung in der Fourier-Ebene in Richtung der Koordinatenachse des Sensors hängt von der Pixelzahl des Sensors in der jeweiligen Achse ab. Bei einem quadratischen Array ist die Abtastung in beiden Achsen gleich groß. Die Kreise (vgl. FIG 9) zeigen den Bereich des Fourier-Raums des Bildes, der von der jeweiligen Wellenlänge abgedeckt wird. Der Bereich der Fourier-Ebene, der nicht von den Kreisen abgedeckt wird, bezieht sich auf Ortsfrequenzen im Bild, die für den Beitrag einer bestimmten Wellenlänge zum Gesamtbild nicht zugänglich sind. Es handelt sich um Abtastfrequenzen, die über das Nyquist-Theorem hinausgehen.

Von besonderem Interesse ist die oben bereits erwähnte Schnittdarstellung von FIG 10 der Fourier-Ebene. Sie zeigt, wie das Wellenlängenspektrum für die korrekte Rekonstruktion in Erscheinung tritt. Die Dreiecksform zwischen $\lambda_{max}$ und $\lambda_{min}$ mit negativer Steigung ist eine direkte Folge der Annahme, dass die Lichtintensität für jede Wellenlänge gleich ist. In realen Fällen haben Lichtquellen in der Regel keine so gleichmäßigen Emissionsprofile, und auch die Optik und die Probe haben keine so ideale Transmissionsleistung.

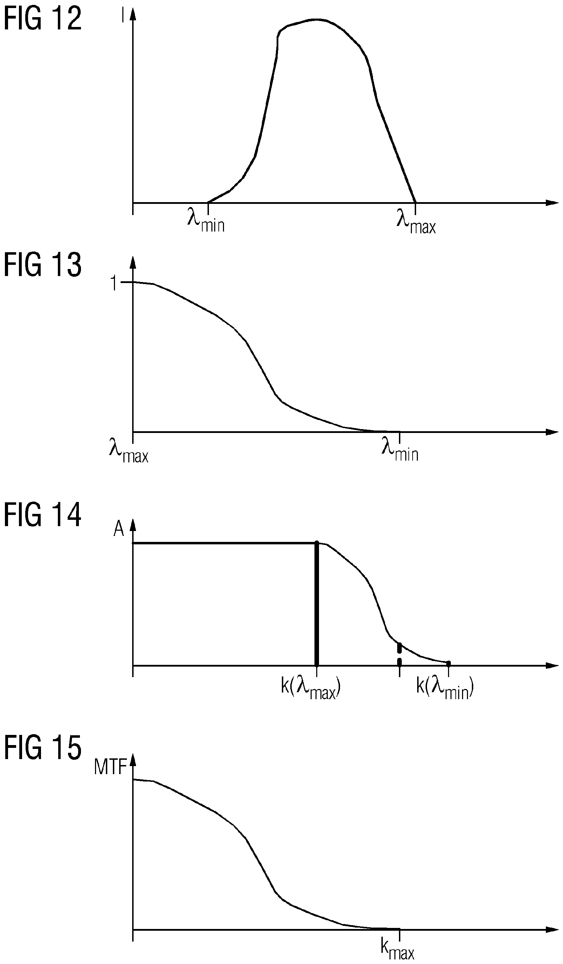

In einem realistischen Szenario hat man ein effektives Übertragungsprofil des optischen Systems mit einer bestimmten Wellenlängencharakteristik, die beispielhaft in FIG 12 dargestellt ist. Diese Kurve der spektralen Leistungsverteilung (die als Dichtefunktion betrachtet wird) führt zu der gewichteten Verteilungsfunktion gemäß FIG 13, indem das Integral von einer bestimmten Wellenlänge bis $\lambda_{min}$ genommen wird. Sie wird durch den Maximalwert für die Fläche unter der Kurve zwischen $\lambda_{max}$ und $\lambda_{min}$ auf 1 normiert.

Unter Berücksichtigung dieser Tatsache ändert sich die Skizze für den Radialschnitt der Fourier-Ebene (vgl. FIG 10) entsprechend FIG 14. Dort ist die spektrale Verteilung in der Übertragungsfunktion für die Fourier-Komponenten enthalten, um die höheren räumlichen Frequenzbeiträge zu filtern. Diese Übertragungsfunktion kann als eine wellenlängenabhängige Pupillenfunktion interpretiert werden, die einer Pupillenblende in der Pupille eines optischen Abbildungssystems entspricht. Diese Darstellung entspricht funktional gesehen genau der optischen Funktion einer physischen Blende in der Aperturebene bei spektral korrigierter Pupillenabbildung mit einem Durchmesser passend zur maximalen Apertur $NA_{max}$ des Objektivs.

Reale optische Systeme haben keine konstante Übertragungsfunktion über den gesamten Frequenzbereich von 0 bis zur maximalen übertragenen Raumfrequenz. In einer realen Welt wird der Frequenzgang durch eine Modulationsübertragungsfrequenz beschrieben. Sie hat den Wert 1 oder ihren Maximalwert für die Frequenz 0 und fällt bei der vom System übertragenen maximalen Ortsfrequenz auf 0 ab (vgl. FIG 15). Bei der Rekonstruktion von Fourier-ptychografischen Bildern muss dieser Effekt kompensiert werden, wenn die unterschiedlichen Raumfrequenzmuster aus den Fourier-Transformationen der verschiedenen Beleuchtungsrichtungen kombiniert werden.

Die Modulationsübertragungsfunktion (MTF) kann mit jeder bekannten Methode bestimmt werden, z. B. aus der Abbildung von Teststrukturen und der Auswertung des Kontrastes oder durch die Bestimmung von Kenngrößen für die Abbildungsleistung (z. B. Seidel-Koeffizienten, Zernike-Koeffizienten) der optischen Systeme und die Berechnung der MTF daraus mit einem geeigneten Formalismus. Sodann kann das Bild oder das Fourier-Spektrum des Bildes um die MTF korrigiert werden, um ein Bild von viel höherer Qualität zu erhalten, vorzugsweise so, wie ein ideales optisches System das Objekt abgebildet hätte. Die korrigierten FourierSpektren können dann in ein gemeinsames Spektrum mit größerem räumlichen Frequenzgehalt zusammengeführt werden, um ein rekonstruiertes Bild hoher Qualität zu erzeugen. Für den Zusammenführungsprozess können bekannte (iterative) Optimierungsalgorithmen 12 für die Bildsuche, wie die von Gerchberg-Saxton oder Levenberg-Marquardt, oder vergleichbare Verfahren zur iterativen Lösung mehrdimensionaler und/oder nichtlinearer Probleme verwendet werden.

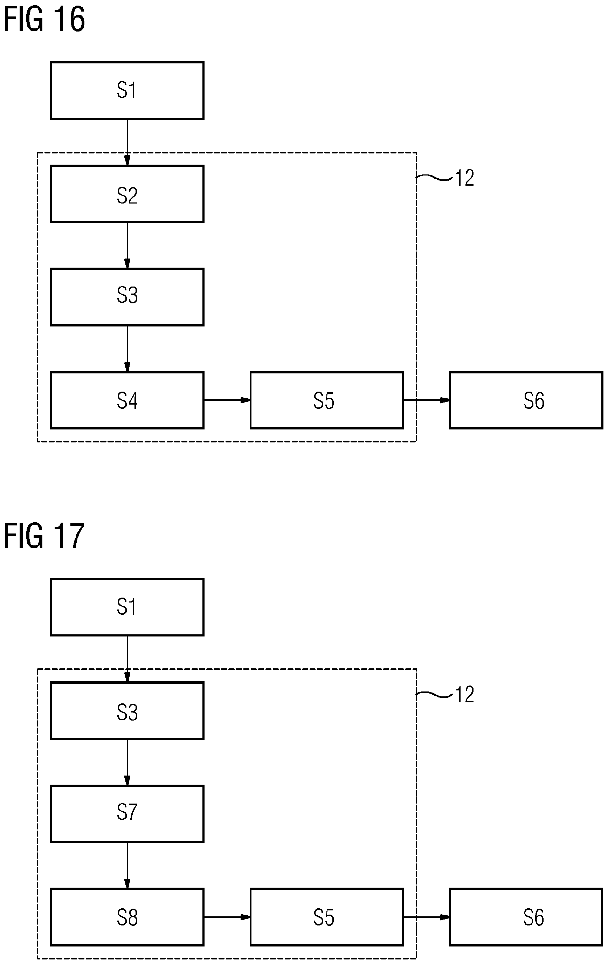

Im Allgemeinen könnte die gesamte Optimierung auch in einem Schritt durchgeführt werden, wie dies beim Stand der Technik für die Fourier-Ptychografierekonstruktion der Fall ist. In diesem Sinne zeigen die funktionalen Flussdiagramme von FIG 16 und 17 nur eine generische Strategie zur Implementierung des gesamten Rekonstruktionsprozesses, der umstrukturiert werden kann, ohne den Rahmen des Rekonstruktionsziels zu verlassen.

In dem Beispiel von FIG 16 wird in einem Schritt S1 ein Bild für einen Optimierungsalgorithmus 12 für die Bilderzeugung (z. B. der von Gerchberg-Saxton oder Levenberg-Marquardt) bereitgestellt. Im Rahmen dieses Algorithmus 12 erfolgt in einem Schritt S2 eine Dekonvolution von Bild und MTF. In einem anschließenden Schritt S3 erfolgt eine Fourier-Transformation (FFT) in den Fourier-Raum. Im anschließenden Schritt S4 werden die Fourier-Bilder zusammengefügt. Im nachfolgenden Schritt S5 erfolgt eine inverse Fourier-Transformation zur Bilderzeugung. Die Schritte S3 bis S5 können iterativ ausgeführt werden, wobei es in einem Iterationszyklus auch einen Schritt zum Abgleich des aktuellen Bildes mit mindestens einem der Eingangsbilder aus S1 bzw. einem optimierten Eingangsbild nach Schritt S2 geben kann. Letztlich kann in einem Schritt S6 ein hochqualitatives Ausgangsbild bereitgestellt werden.

Alternativ kann der Rekonstruktionsprozess auch entsprechend dem Beispiel von FIG 17 durchgeführt werden. Auch hierbei wird zunächst in einem Schritt S1 ein Bild für den Optimierungsalgorithmus 12 bereitgestellt. Innerhalb dessen erfolgt aber nun unmittelbar eine Fourier-Transformation gemäß Schritt S3. Dem schließt sich ein Schritt S7 an, bei dem die Beiträge des Abbildungssystems und des Objekts im Fourier-Raum getrennt werden. Anschließend wird in Schritt S8 eine Zusammenfügung von realem/Fourier-Bild durchgeführt, bevor sich wiederum eine inverse Fourier-Transformation gemäß Schritt S5 anschließt, um gemäß Schritt S6 ein hochqualitatives Ausgangsbild bereitstellen zu können.

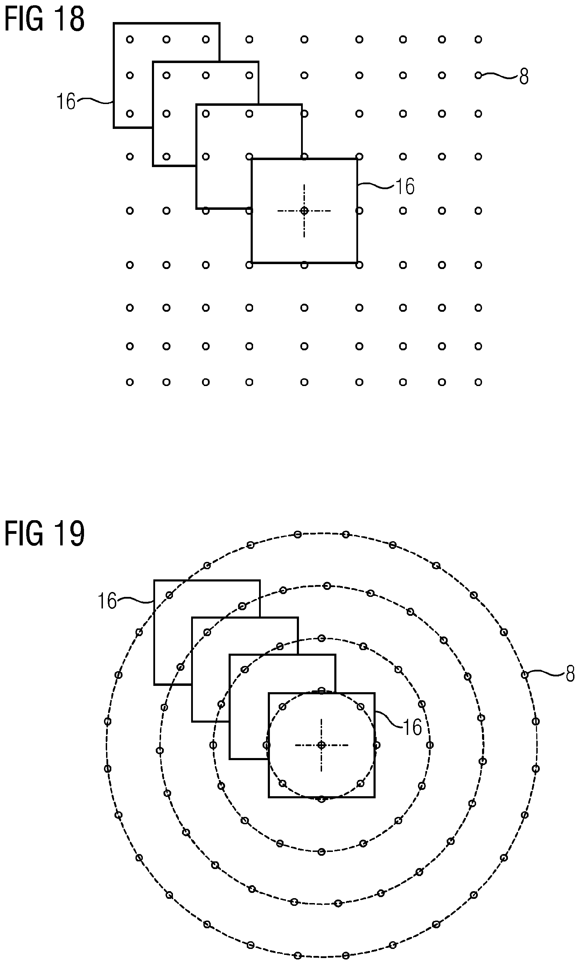

Anhand der FIG 18 und 19 wird das Konzept der Kombination von Beleuchtungs- und Abtastkoordinatensystemen im Fourier-Raum plakativ erläutert, wobei zur Erläuterung entsprechend geeignete Skalierungen gewählt wurden. Basis für die FIG 18 und 19 sind die Fourier-Räume der FIG 6 und 7 für eine flache rechteckförmige Beleuchtungseinrichtung beziehungsweise eine sphärische Beleuchtungseinrichtung. In der Mitte der beiden Fourier-Räume befindet sich jeweils ein Ortsfrequenzmuster des optischen Sensors für eine Beleuchtung auf der optischen Achse. Symbolhaft sind in den Fourier-Räumen weitere Ortsfrequenzmuster 16 (gleich dem Obertonspektrum 11' aus FIG 11) des optischen Sensors eingetragen, jeweils zentriert bei einer Nominalortsfrequenz der Beleuchtungseinrichtung. Das Beleuchtungskoordinatensystem erstreckt sich über einen größeren Bereich im Fourier-Raum-Koordinatensystem als das Abbildungskoordinatensystem. Neben dem zentralen Bild mit achsgleicher Beleuchtung auf der optischen Achse des Abbildungskoordinatensystems können so mehrere Bilder bei anderen Beleuchtungswinkeln aufgenommen werden. Nach dem Zusammenfügen der Bilder im Fourier-Raum kann die Rücktransformation stattfinden, woraus sich das hochaufgelöste Bild ergibt.

**Patentansprüche**

1. Verfahren zur Fourier-ptychografischen Erzeugung eines Bilds eines Objekts mittels einer farbkorrigierten Optik (6) durch

   - Beleuchten des Objekts mit einer Vielzahl an Beleuchtungselementen (4), die an einer entsprechenden Vielzahl an Orten im Raum verteilt angeordnet sind,

   **gekennzeichnet durch**

   - Erfassen mehrerer Ortsfrequenzmuster (16) resultierend aus dem Beleuchten des Objekts jeweils mit einem einzelnen oder mehreren der Vielzahl an Beleuchtungselementen (4),
   - Zentrieren jedes Ortsfrequenzmusters (16) an einer Position im Fourier-Raum (4), die einer Nominalortsfrequenz (8) des jeweiligen Beleuchtungselements (4) bzw. der jeweiligen Beleuchtungselemente entspricht und
   - Rekonstruieren des Bildes unter Verwendung einer Gesamtheit aller jeweilig zentrierten Ortsfrequenzmuster (16).

2. Verfahren nach Anspruch 1, wobei die Vielzahl an Orten im Raum, an denen die Beleuchtungselemente (4) verteilt angeordnet sind, auf einer Fläche liegen, die eben, ellipsoidisch oder kugelschalenabschnittförmig ausgebildet ist.

3. Verfahren nach Anspruch 1 oder 2, wobei die jeweilige Nominalortsfrequenz (8) aus einem Einstrahlwinkel des jeweiligen Beleuchtungselements (4) auf das Objekt oder einer Position des jeweiligen Beleuchtungselements (4) ermittelt wird.

4. Verfahren nach Anspruch 3, wobei die jeweilige Nominalortsfrequenz (8) berechnet wird

   a) bei einer rechteckigen Anordnung der Vielzahl an Beleuchtungselementen (4), die in orthogonalen Raumrichtungen x und y zueinander einen gleichförmigen Abstand $P_x$ und $P_y$ besitzen, mit den Formeln:

   $$K_{x,i} = \mathrm{atan}(i * P_x/D)$$

   und

   $$K_{y,j} = \mathrm{atan}(j * P_y/D),$$

   wobei D einer Distanz zwischen einer Objektebene (2), in der sich das Objekt befindet, und einer Beleuchtungsebene, in der die Vielzahl an Beleuchtungselementen (4) angeordnet ist, entspricht, oder
   b) bei einer sphärischen oder ellipsoidischen Anordnung der Vielzahl der Beleuchtungselemente, die bei azimutalen Winkeln $\varphi_{ij}$ in Ringen i und Polarwinkeln $\vartheta_i$, zu einer optischen Achse der Optik (6) angeordnet sind, mit den Formeln:

   $$K_{x,ij} = \vartheta_i \cos(\varphi_{ij} + \delta\varphi_i)$$

   und

$$K_{y,ij} = \vartheta_i \sin(\varphi_{ij}+\delta\varphi_i),$$

wobei $\delta\varphi_i$ ein gleichförmiger azimutaler Abstand der Beleuchtungselemente (4) auf dem jeweiligen Ring i ist.

5. Verfahren nach einem der vorhergehenden Ansprüche, wobei das Rekonstruieren des Bildes eine Fourier-Rücktransformation der Gesamtheit aller jeweilig zentrierten Ortsfrequenzmuster (16) beinhaltet.

6. Verfahren nach einem der vorhergehenden Ansprüche, wobei ein für das Rekonstruieren des Bildes genutzter Ortsfrequenzraum (7) zu diesem Bild auf Basis einer maximalen Ortsfrequenz begrenzt wird, die durch eine numerische Apertur der farbkorrigierten Optik (6) definiert ist.

7. Verfahren nach einem der vorhergehenden Ansprüche, wobei jedes Ortsfrequenzmuster (16) mit einem Verlaufs-oder Apodisationsfilter begrenzt wird, das gemäß einem Wellenlängenprofil der Beleuchtungselemente (4) konfiguriert ist.

8. Verfahren nach einem der vorhergehenden Ansprüche, wobei jedes Ortsfrequenzmuster (16) mit einer inversen Modulationsübertragungsfunktion der farbkorrigierten Optik (6) korrigiert wird.

9. Verfahren nach Anspruch 8, wobei bei dem Rekonstruieren jedes mit dem einzelnen oder den mehreren der Vielzahl der Beleuchtungselemente (4) gewonnene Einzelbild durch Dekonvolution von der Modulationsübertragungsfunktion der farbkorrigierten Optik (6) befreit wird, jedes so korrigierte Einzelbild anschließend zu einem jeweiligen korrigierten Ortsfrequenzmuster transformiert wird und erst die korrigierten Ortsfrequenzmuster zusammengefügt werden.

10. Verfahren nach Anspruch 8, wobei bei dem Rekonstruieren jedes mit dem einzelnen oder den mehreren der Vielzahl der Beleuchtungselemente (4) gewonnene Einzelbild durch Fourier-Transformation zu einem jeweiligen Ortsfrequenzmuster (16) transformiert wird, jedes Ortsfrequenzmuster anschließend von Einflüssen der Optik (6) und/oder der Beleuchtungselemente (4) auf eine jeweilige Übertragungsfunktion für Fourier-Komponenten des jeweiligen Ortsfrequenzmusters befreit wird und erst die so korrigierten Ortsfrequenzmuster zusammengefügt werden.

11. Verfahren nach einem der vorhergehenden Ansprüche, wobei bei dem Rekonstruieren des Bildes alle Ortsfrequenzmuster mit Hilfe eines iterativen Optimierungsalgorithmus zusammengefügt werden.

12. Vorrichtung zur Fourier-ptychografischen Erzeugung eines Bilds eines Objekts mit

- einer farbkorrigierten Optik (6) und
- einer Beleuchtungseinrichtung (3) zum Beleuchten des Objekts mit einer Vielzahl an Beleuchtungselementen (4), die an einer entsprechenden Vielzahl an Orten im Raum verteilt angeordnet sind,

**gekennzeichnet durch**

- eine Erfassungseinrichtung (10) zum Erfassen mehrerer Ortsfrequenzmuster resultierend aus dem Beleuchten des Objekts jeweils mit einem einzelnen oder mehreren der Vielzahl an Beleuchtungselementen (4) und
- eine Recheneinrichtung zum Zentrieren jedes Ortsfrequenzmusters (16) an einer Position im Fourier-Raum, die einer Nominalortsfrequenz (8) des jeweiligen Beleuchtungselements bzw. der jeweiligen Beleuchtungselemente (4) entspricht, und zum Rekonstruieren des Bildes unter Verwendung einer Gesamtheit aller jeweilig zentrierten Ortsfrequenzmuster (16) .

13. Computerprogramm, umfassend Befehle, die bei der Ausführung des Programms durch eine Vorrichtung nach Anspruch 12 diese veranlassen, das Verfahren nach einem der Ansprüche 1 bis 11 auszuführen.

14. Computerlesbares Speichermedium, umfassend Befehle, die bei der Ausführung durch eine Vorrichtung nach Anspruch 12 diese veranlassen, das Verfahren nach einem der Ansprüche 1 bis 11 auszuführen.

# FIG 1

# FIG 3

# FIG 2

FIG 4

FIG 5

## FIG 6

## FIG 7

FIG 8

FIG 9

FIG 10

# FIG 11

FIG 12

FIG 13

FIG 14

FIG 15

## FIG 16

```
┌─────────────┐
│     S1      │
└─────────────┘
       │
       ▼
┌ ─ ─ ─ ─ ─ ─ ─ ─ ─ ─ ─ ─ ─ ─ ─ ─ ─ ─ ─ ─ ┐  ~12
  ┌─────────────┐
│ │     S2      │                         │
  └─────────────┘
│        │                                │
         ▼
│ ┌─────────────┐                         │
  │     S3      │
│ └─────────────┘                         │
         │
│        ▼                                │
  ┌─────────────┐   ┌─────────────┐   ┌─────────────┐
│ │     S4      │──▶│     S5      │ │─▶│     S6      │
  └─────────────┘   └─────────────┘   └─────────────┘
└ ─ ─ ─ ─ ─ ─ ─ ─ ─ ─ ─ ─ ─ ─ ─ ─ ─ ─ ─ ─ ┘
```

## FIG 17

```
┌─────────────┐
│     S1      │
└─────────────┘
       │
       ▼
┌ ─ ─ ─ ─ ─ ─ ─ ─ ─ ─ ─ ─ ─ ─ ─ ─ ─ ─ ─ ─ ┐  ~12
  ┌─────────────┐
│ │     S3      │                         │
  └─────────────┘
│        │                                │
         ▼
│ ┌─────────────┐                         │
  │     S7      │
│ └─────────────┘                         │
         │
│        ▼                                │
  ┌─────────────┐   ┌─────────────┐   ┌─────────────┐
│ │     S8      │──▶│     S5      │ │─▶│     S6      │
  └─────────────┘   └─────────────┘   └─────────────┘
└ ─ ─ ─ ─ ─ ─ ─ ─ ─ ─ ─ ─ ─ ─ ─ ─ ─ ─ ─ ─ ┘
```

FIG 18

16

8

16

FIG 19

16

16

8

Europäisches
Patentamt

European
Patent Office

Office européen
des brevets

# EUROPÄISCHER RECHERCHENBERICHT

Nummer der Anmeldung

**EP 22 17 2989**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2015/054979 A1 (OU XIAOZE [US] ET AL) 26. Februar 2015 (2015-02-26) | 1-6,8-14 | INV. G06T5/50 H04N5/225 G02B21/36 G02B21/00 |
| A | * Absätze [0037] - [0091], [0125] - [0132]; Abbildungen 1-4,8 * ----- | 7 | |
| Y | GUOAN ZHENG ET AL: "Wide-field, high-resolution Fourier ptychographic microscopy", NATURE PHOTONICS, Bd. 7, Nr. 9, 28. Juli 2013 (2013-07-28), Seiten 739-745, XP055181687, ISSN: 1749-4885, DOI: 10.1038/nphoton.2013.187 * das ganze Dokument * ----- | 1-6,8-14 | |

**RECHERCHIERTE SACHGEBIETE (IPC)**

G06T
H04N

Der vorliegende Recherchenbericht wurde für alle Patentansprüche erstellt

| Recherchenort | Abschlußdatum der Recherche | Prüfer |
|---|---|---|
| München | 25. Oktober 2022 | Stemmer, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 17 2989

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2022

| Im Recherchenbericht angeführtes Patentdokument | Datum der Veröffentlichung | Mitglied(er) der Patentfamilie | Datum der Veröffentlichung |
|---|---|---|---|
| US 2015054979 A1 | 26-02-2015 | AU 2014308673 A1 | 03-03-2016 |
| | | CA 2921372 A1 | 26-02-2015 |
| | | CN 105765690 A | 13-07-2016 |
| | | CN 110082900 A | 02-08-2019 |
| | | EP 3036753 A1 | 29-06-2016 |
| | | JP 2016530567 A | 29-09-2016 |
| | | US 2015054979 A1 | 26-02-2015 |
| | | US 2016320605 A1 | 03-11-2016 |
| | | US 2018316855 A1 | 01-11-2018 |
| | | US 2020186705 A1 | 11-06-2020 |
| | | WO 2015027188 A1 | 26-02-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **B. G. ZHENG.** Fourier ptychographic imaging. Verlag: Morgan & Claypool Publishers, 2016